# EUROPEAN PATENT APPLICATION

(11) **EP 3 832 925 A1**
(43) Date of publication of application: **09.06.2021**
(21) Application number: 18928188.4
(22) Date of filing: 03.08.2018
(51) Int. Cl.: H04L 1/08

(54) **USER TERMINAL AND RADIO COMMUNICATION METHOD**

(71) Applicant: NTT DoCoMo, Inc., Tokyo 100-6150 (JP)
(72) Inventor: OKAMURA, Masaya, Tokyo 100-6150 (JP); TAKEDA, Kazuaki, Tokyo 100-6150 (JP); HARADA, Hiroki, Tokyo 100-6150 (JP); MATSUMURA, Yuki, Tokyo 100-6150 (JP)
(74) Representative: Hoffmann Eitle
(86) International application number: PCT/JP2018/029306
(87) International publication number: WO 2020/026451

(57) **Abstract**

A user terminal according to one aspect of the present disclosure includes: a receiving section that receives information regarding the number of symbols instructed to perform UL transmission in a slot and information regarding the number of UL symbols in the slot; and a control section that determines whether or not to perform repetition transmission in the slot based on of the number of symbols instructed to perform UL transmission and the number of UL symbols. According to one aspect of the present disclosure, it is possible to perform suitable repetition transmission in units shorter than a slot.

## Description

### Technical Field

The present disclosure relates to user terminal and a radio communication method in a next-generation mobile communication system.

### Background Art

In the universal mobile telecommunications system (UMTS) network, the specifications of long-term evolution (LTE) have been drafted for the purpose of further increasing high speed data rates, providing lower delays and so on (see Non-Patent Literature 1). Further, the specifications of LTE Advanced (LTE-A, LTE Rel. 10, 11, 12, 13) have been made for the purpose of further increasing the capacity and advancement of LTE (LTE Rel. 8, 9).

Successor systems of LTE (for example, Future Radio Access (FRA), 5th generation mobile communication system (5G), 5G+ (plus), New Radio (NR), New radio access (NX), Future generation radio access (FX), LTE (referred to as Rel. 14 or 15 or later versions) are also under study.

In a radio communication system, a fading phenomenon in which communication quality fluctuates due to influence of a multipath is problematic. Diversity is a technique of compensating for fading. Among the diversity, diversity which is implemented by a transmission side transmitting signals using a plurality of antennas is referred to as transmit diversity. In transmit diversity, it is not always necessary to increase the number of receiving antennas on a reception side, and thus, received quality, area coverage, and the like, are expected to be improved, and increase of a circuit scale and power consumption on the reception side is expected to be prevented.

LTE-A (Rel-10) supports spatial orthogonal-resource transmit diversity (SORTD) that uses multiple PUCCH resources transmitted in different antenna ports transmissions for the physical uplink control channel (PUCCH).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In NR, the use of space-time block code (STBC) is being considered as a candidate for transmit diversity. In addition, in NR, the multi-slot transmission is also being considered. The multi-slot transmission is transmission over a plurality of slots and can be referred to as slot aggregation, repetition transmission, or the like.

On the other hand, if the repetition transmission in units shorter than a slot is possible, it is preferable from the viewpoint of achieving flexible control. However, in NR, such repetition transmission in units shorter than a slot has not yet been considered. Unless the measures for such case are clarified, appropriate UL transmission/reception fails to be performed, causing communication throughput, frequency utilization efficiency, or the like to deteriorate.

Thus, the present disclosure is intended to provide, as one of the objects, a user terminal and a radio communication method capable of performing appropriate repetition transmission in units shorter than a slot.

### Solution to Problem

A user terminal according to one aspect of the present disclosure includes: a receiving section that receives information regarding the number of symbols instructed to perform UL transmission in a slot and information regarding the number of UL symbols in the slot; and a control section that determines whether or not to perform repetition transmission in the slot based on of the number of symbols instructed to perform UL transmission and the number of UL symbols.

### Advantageous Effects of Invention

According to one aspect of the present disclosure, it is possible to perform suitable repetition transmission in units shorter than a slot.

### Brief Description of Drawings

Fig. 1 is a diagram illustrated to describe the concept of STBC.
Fig. 2 is a diagram illustrated to describe the concept of multi-slot transmission.
Fig. 3 is a diagram illustrating an example of a UL slot configuration assumed in one embodiment.
Fig. 4 is a diagram illustrating an example of repetition transmission in one slot corresponding to the example of Fig. 3.
Fig. 5 is a diagram illustrating another example of repetition transmission in one slot corresponding to the example of Fig. 3.
Fig. 6 is a diagram illustrating still another example of repetition transmission in one slot.
Fig. 7 is a diagram illustrating an example of pairing in one embodiment.
Fig. 8 is a diagram illustrating an example of a schematic configuration of a radio communication system according to an embodiment.
Fig. 9 is a diagram illustrating an example of an overall configuration of a base station according to an embodiment.
Fig. 10 is a diagram illustrating an example of a functional configuration of a base station according to an embodiment.
Fig. 11 is a diagram illustrating an exemplary overall structure of a user terminal according to an embodiment.
Fig. 12 is a diagram illustrating an exemplary functional structure of a user terminal according to an embodiment.
Fig. 13 is a diagram illustrating an exemplary hardware structure of a base station and a user terminal according to an embodiment.

### Description of Embodiments

The use of transmit diversity is considered even for NR. Examples of a candidate for transmit diversity applied to the physical uplink-shared channel (PUSCH) include space-frequency block code (SFBC), single-carrier SFBC (SC-SFBC), space-time block code (STBC), spatial stream STBC (SS-STBC), antenna switching, cyclic delay diversity (CDD), or the like. SC-SFBC can be called peak-to-average power ratio (PAPR)-preserving SFBC or the like.

In one example, STBC is a scheme of encoding multiple resources to the time domain using Alamouti's code (encoding signals of these resources collectively as one block). More specifically, the signal/channel to which STBC is applied is transmitted from a different transmitting antenna after the orthogonalization performed on a symbol pair with the Alamouti's code and the REs to be mapped are exchanged.

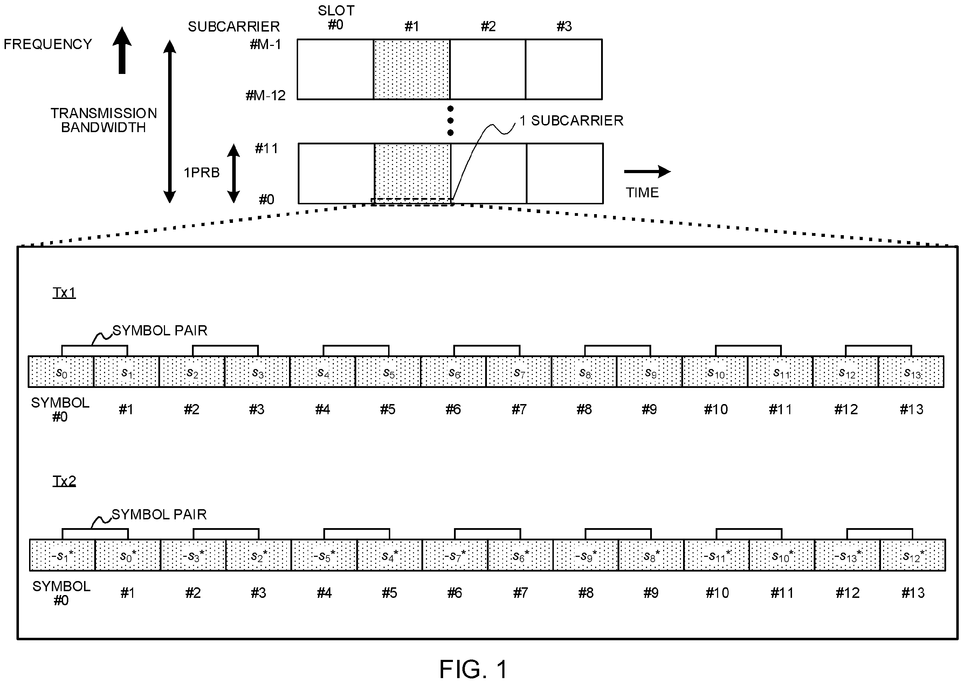

Fig. 1 is a diagram illustrated to describe the concept of STBC. Fig. 1 illustrates an example in which UE transmits PUSCH in slot #1 over a transmission bandwidth corresponding to the number of subcarriers M. One resource block is assumed to have a configuration of 12 subcarriers × 14 symbols. In addition, the slot has 14 symbols. Note that the number of resource elements included in the resource block, the number of symbols included in the slot, or the like is not limited thereto.

UE transmits PUSCH of slot #1 using STBC. The UE can perform pairing from the initial UL symbol (a PUSCH symbol) to the tail in the slot. In this description, the pairing can also mean to determine two symbols (a symbol pair) to which STBC is applied (or to apply STBC to the symbol pair).

In Fig. 1, the set of symbols #2n and #2n+1 (where n = 0, 1, ..., 6) corresponds to the symbol pair. The UE encodes a symbol pair (sᵢ and sᵢ₊₁) with Alamouti's code, transmits it through one antenna (Tx1) in the order of sᵢ, sᵢ₊₁, and transmits it through the other antenna (Tx2) at the same timing in the order of -sᵢ₊₁*, sᵢ* (where "*" indicates complex conjugate). A base station is capable of performing simple spatiotemporal decoding processing on the received signal to decode the original sᵢ and sᵢ₊₁.

Although only one subcarrier is illustrated in detail in Fig. 1, the same is true for other subcarriers. The same is true for the case where only one subcarrier is illustrated in detail also in the following drawings.

Moreover, the term "symbol" used herein can be read interchangeably as a symbol for a UL signal or channel (e.g., PUSCH or PUCCH) to which STBC is applied. In one example, "initial symbol of a slot" can mean the initial symbol in the slot to which PUSCH is assigned.

STBC has the advantage of capable of suppressing peak-to-average power ratio (PAPR) even in being applied to a single-carrier waveform such as discrete Fourier transform spread orthogonal frequency division multiplexing (DFT spread OFDM or DFT-s-OFDM).

In NR, the multi-slot transmission is also considered. The multi-slot transmission is transmission over a plurality of slots and can be referred to as slot aggregation, repetition transmission, or the like. In each slot of the multi-slot transmission, signals having the same contents can be transmitted, or signals having different contents can be transmitted.

In one example, PUCCH repetition can be set in the UE using higher layer signaling for PUCCH formats 1, 3, and 4 with a transmission period of four symbols or more. The repetition factor can be set in common for all of PUCCH formats 1, 3, and 4.

Moreover, the higher layer signaling herein can be, for example, any one of radio resource control (RRC) signaling, medium access control (MAC) signaling, broadcast information, or the like, or a combination thereof.

The MAC signaling can use, for example, a MAC control element (MAC CE), a MAC protocol data unit (PDU), or the like. Examples of the broadcast information include master information block (MIB), system information block (SIB), remaining minimum system information (RMSI), and other system information (OSI).

Further, the repetition factor can be set using higher layer signaling (e.g., RRC parameter "aggregationFactorUL" and RRC parameter "repK" for configured grant PUSCH) for PUSCH repetition. The number of PUSCH repetitions can be set to, in one example, 1, 2, 4, 8, or the like. In addition, the redundancy version (RV) of PUSCH in each slot during PUSCH repetition transmission can be different or the same.

Moreover, the repetition factor and the repetition number herein can be read interchangeably. Besides, the repetition number can represent the number of repetitions of specific UL transmission (e.g., PUSCH or PUCCH).

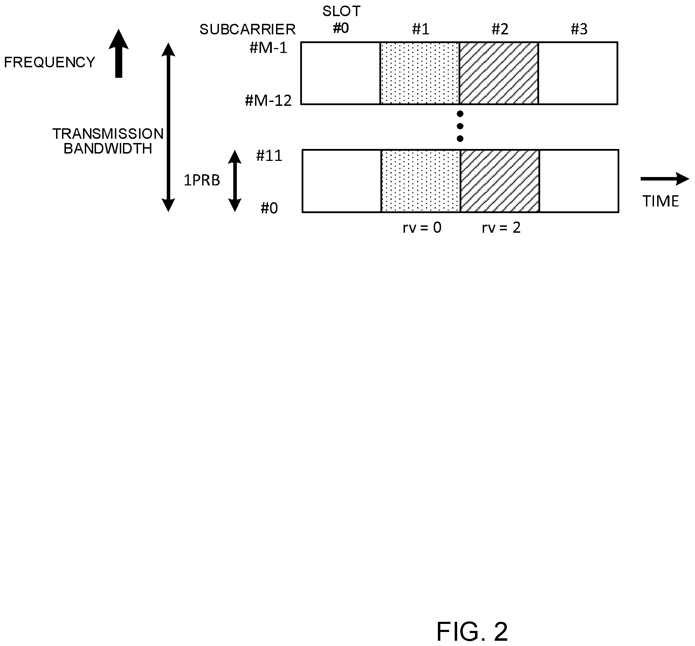

Fig. 2 is a diagram illustrated to describe the concept of multi-slot transmission. In this example, the UE performs repetition transmission over slots #1 and #2 based on the number of repetitions = 2. In the repetition transmission, PUSCH is transmitted over the transmission bandwidth corresponding to the number of subcarriers M.

Different rvs are used for each slot for repetition transmission, such as rv (ID of RV) = 0 in slot #1 and rv = 2 in slot #2. However, the value of rv is not limited thereto. In addition, the same rv can be used in a plurality of slots in the repetition transmission.

Moreover, the repetition factor and the repetition number herein can be read interchangeably. Besides, the repetition number can represent the number of repetitions of specific UL transmission (e.g., PUSCH or PUCCH).

By the way, if it is possible to perform repetition transmission in units shorter than a slot, it is preferable from the viewpoint of achieving flexible control. However, in NR, such repetition transmission in units shorter than a slot has not yet been considered. Unless the measures for such case are clarified, appropriate UL transmission/reception fails to be performed, causing communication throughput, frequency utilization efficiency, or the like to deteriorate.

Thus, the present inventors have conceived the setting for achieving repetition transmission in units shorter than a slot and also the operation of UE and a base station.

Hereinafter, embodiments according to the present disclosure will be described in detail with reference to the drawings. The radio communication method according to each of the embodiments may be applied independently, or may be applied in combination with others.

Moreover, the following embodiments mainly show an example of PUSCH, but those skilled in the art are able to perform similar processing for other UL signals/channels based on the present disclosure. In other words, PUSCH can be read interchangeably as other UL transmission types (such as PUCCH).

### (Radio Communication Method)

### [In-slot repetition transmission]

In one embodiment, the UE determines to perform repetition transmission in one slot if a given condition is satisfied.

In one example, in the case where the number of symbols instructed to perform UL transmission in a slot (e.g., can be called N_{allo_s}) and the number of UL symbols in the slot (e.g., can be called N_{UL_s}) satisfy a specific relation, the UE can repeatedly perform UL transmission in the slot.

The specific relation can be, for example, N_{UL_s}/N_{allo_s} ≥ X (where X is an integer of two or more) . Satisfying this equation means that there is room for performing repetition transmissions in the slot (there are sufficient UL symbols).

The UE can autonomously determine to perform repetition transmission in the slot that satisfies the specific relation described above.

In the case where the UE is set to perform the in-slot repetition transmission using, for example, by higher layer signaling, the UE can determine to perform repetition transmission in the slot satisfying the specific relation described above.

Further, in the case where a value of a field (can be called an in-slot repetition transmission instruction field) included in DCI (can be called such as UL DCI, UL grant, DCI format 0_0, or DCI format 0_1) that schedules PUSCH indicates that the repetition transmission is performed in the slot and the slot scheduled by the DCI satisfies the specific relation described above, the UE can perform repetition transmission of PUSCH in the slot.

For the repetition transmission of PUSCH, N_{UL_s} corresponds to the number of PUSCH symbols in one slot, and the UE can specify N_{UL_s} based on higher layer signaling, physical layer signaling, or a combination thereof.

In one example, the UE can set a PUSCH-time domain resource allocations list using higher layer signaling (e.g., "PUSCH-TimeDomainResourceAllocationList" information element of RRC). The list can include one or more entries (parameter sets), each entry corresponding to an individual PUSCH symbol number.

Further, the UE can determine one entry in the set list and specify the number of PUSCH symbols scheduled based on the determined entry, depending on a value of the field (time-domain resource allocation field) included in the DCI that schedules PUSCH.

The UE can determine the number of DMRS symbols in a slot for transmitting PUSCH based on a parameter included in the higher layer signaling (e.g., the "DMRS-UplinkConfig" information element of RRC).

Further, in the case where a value of a field (can be called an in-slot repetition transmission instruction field) included in DCI (can be called such as UL DCI, DL assignments, DCI format 1_0, or DCI format 1_1) that schedules PDSCH indicates that the repetition transmission is performed in the slot and the slot for transmitting HARQ-ACK corresponding to PDSCH scheduled by the DCI satisfies the specific relation described above, the UE can perform repetition transmission of PUCCH (the HARQ-ACK above) in the slot.

For the repetition transmission of PUCCH, N_{UL_s} corresponds to the number of PUCCH symbols in one slot, and the UE can specify N_{UL_s} based on higher layer signaling, physical layer signaling, or a combination thereof. Although there are differences such as the list of entries being called a PUCCH resource set, similar to PUSCH described above, the number of PUCCH symbols can be determined based on RRC signaling and DCI.

In one example, N_{allo_s} can be the number of UL symbols per slot (e.g., RRC parameter "nrofUplinkSymbols").

The number of repetitions in a slot can be obtained by floor (N_{UL_s}/N_{allo_s}) (where, N_{UL_s}/N_{allo_s} ≥ 2). Herein, floor(Z) is a floor function and indicates the largest integer less than or equal to the real number Z.

The in-slot repetition number can be set (notified) in the UE using higher layer signaling, physical layer signaling, or a combination thereof.

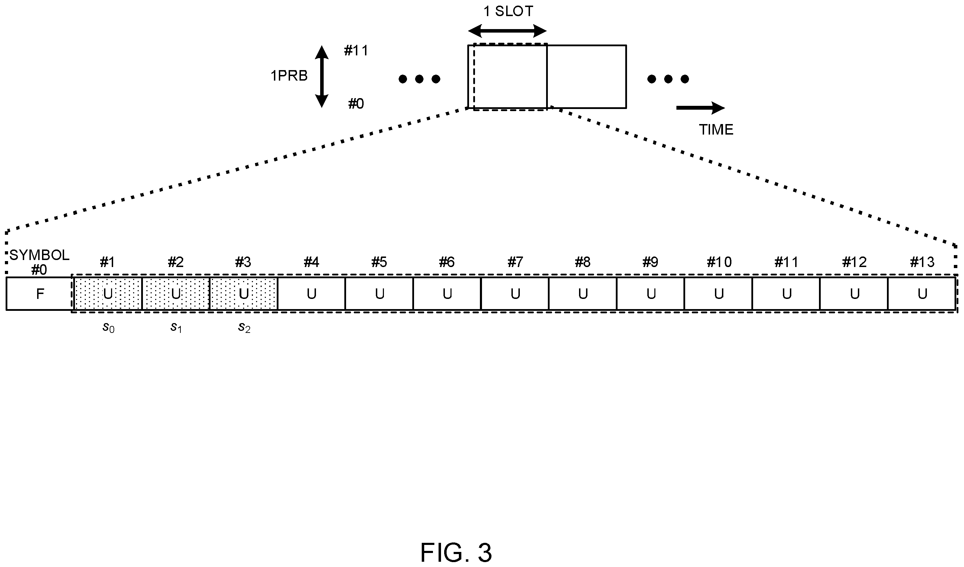

Fig. 3 is a diagram illustrating an example of a UL slot configuration assumed in one embodiment.

In this example, the number of UL symbols (N_{UL_s}) in a slot is 13. Symbol #0 is, for example, a symbol (such as DL or Flexible) that is not used for UL, and symbols #1 to #13 are UL symbols.

Further, the number of symbols (N_{allo_s}) instructed to perform UL transmission in the slot is three. The UE is instructed to transmit signals s₀ to s₂ at symbols #1 to #3, respectively.

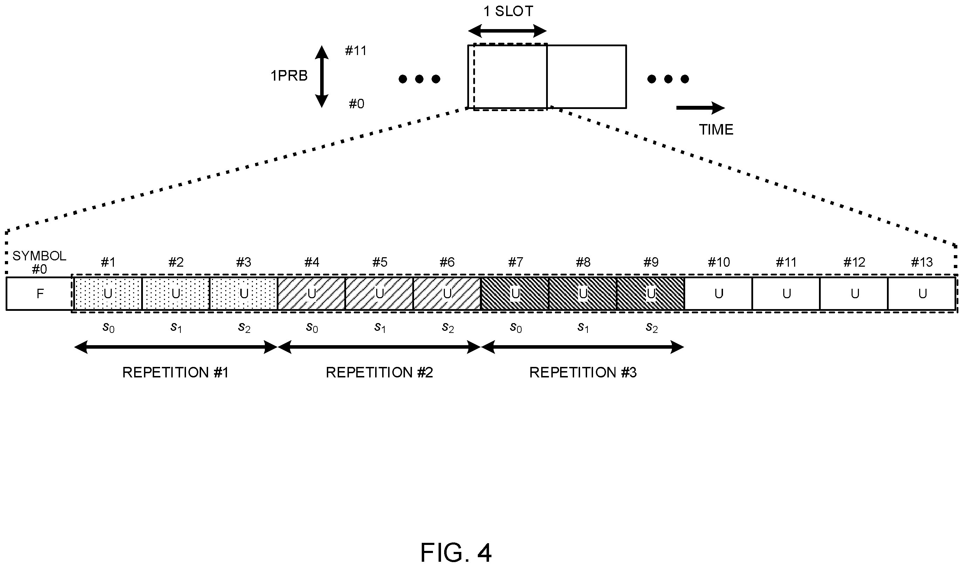

Fig. 4 is a diagram illustrating an example of repetition transmission in one slot corresponding to the example of Fig. 3. In this example, N_{UL_s}/N_{allo_s} ≥ 4. Herein, it is assumed that the UE sets or determines the in-slot repetition number = 3.

As illustrated in Fig. 4, the UE can perform repetition transmission with consecutive symbols. The UE can transmit signals s₀ to s₂ at symbols #1 to #3 (first repetition transmission (repetition #1)), transmit signals s₀ to s₂ at symbols #4 to #6 (repetition #2), and then transmit signals s₀ to s₂ at symbols #7 to #9 (repetition #3) .

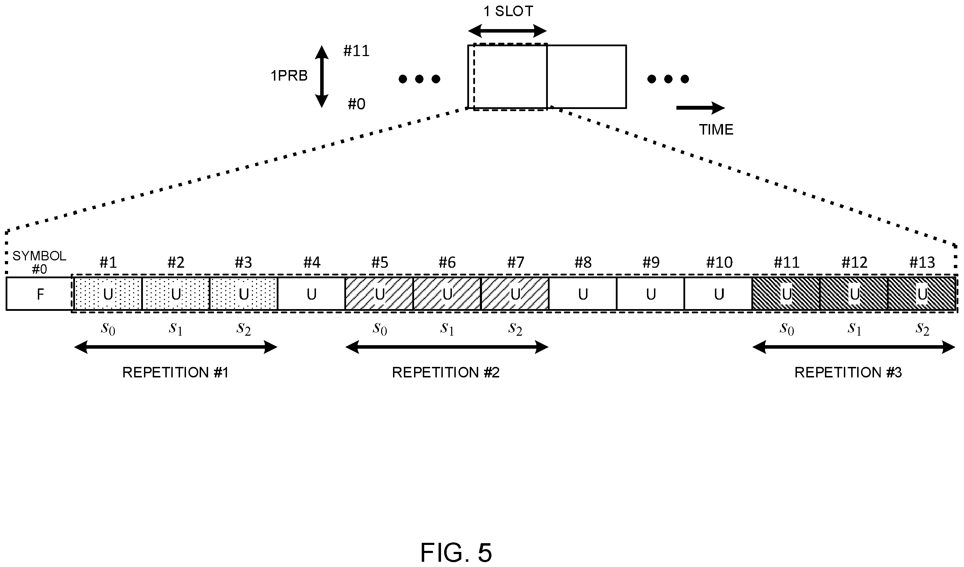

Fig. 5 is a diagram illustrating another example of repetition transmission in one slot corresponding to the example of Fig. 3. The repetition transmission performed with discontinuous symbols is different from that in Fig. 4.

In Fig. 5, the UE can transmit signals s₀ to s₂ at symbols #1 to #3 (repetition #1)), transmit signals s₀ to s₂ at symbols #5 to #7 (repetition #2), and then transmit signals s₀ to s₂ at symbols #11 to #13 (repetition #3) .

One or more start position candidates for in-slot repetition transmission can be set (notified) to the UE using higher layer signaling, physical layer signaling, or a combination thereof, or can be specified by specifications. In the example of Fig. 5, UE may be set symbols #1, #5, and #11 as the above start position candidates.

Moreover, the upper limit value of the in-slot repetition number can be set (notified) in the UE using higher layer signaling, physical layer signaling, or a combination thereof, or can be defined by specifications. In the case where the in-slot repetition number being obtained or notified exceeds the upper limit value described above, the UE can use the upper limit value as the repetition number. In addition, the UE can assume that the upper limit value of the in-slot repetition number is the same as the number of start position candidates. In one example, in the case where the in-slot repetition number exceeds the number of start position candidates, the UE can assume that the number of start position candidates is the repetition number.

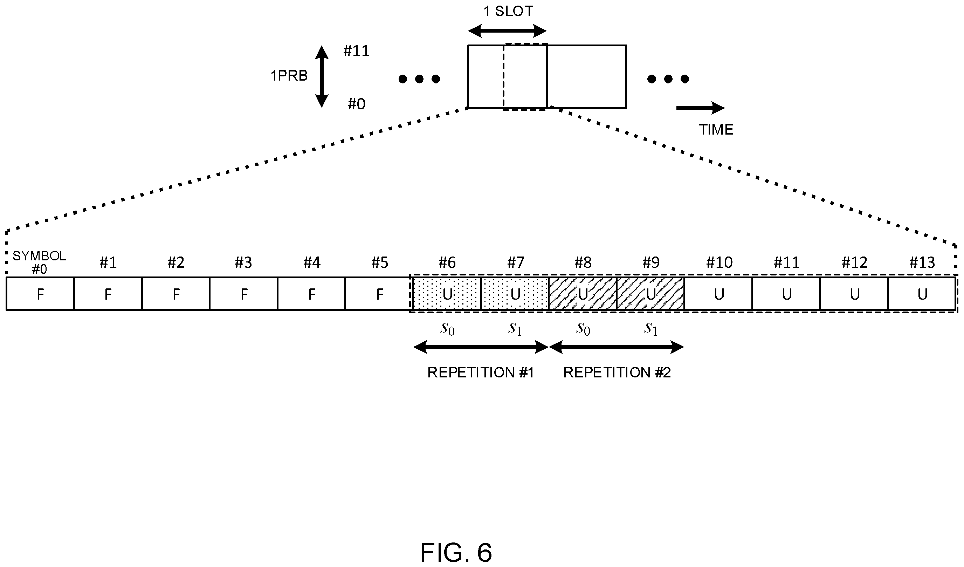

Fig. 6 is a diagram illustrating still another example of repetition transmission in one slot. In this example, the number of UL symbols (N_{UL_s}) in a slot is eight, and symbols #6 to #13 are UL symbols. It is also assumed that the number of symbols (N_{allo_s}) instructed to perform UL transmission in the slot is two. Besides, it is assumed that the UE sets or determines that the in-slot repetition number = 2.

Fig. 6 illustrates an example of repetition transmission with consecutive symbols. The UE can transmit signals s₀ to s₁ at symbols #6 to #7 (repetition #1)), and transmit signals s₀ to s₂ at symbols #8 to #9 (repetition #2) .

### [Applying transmit diversity]

The UE can apply the transmit diversity at the same time as the in-slot repetition transmission. The UE can explicitly set the UL transmit diversity using higher layer signaling. Moreover, the transmit diversity setting can include at least one of whether or not the transmit diversity is applied, the type of transmit diversity to be applied (e.g., STBC or SFBC), or the like.

The UE can implicitly set the UL transmit diversity. The UE can determine that STBC is applied as transmit diversity in a slot that performs the in-slot repetition transmission with a repetition number greater than one.

Further, the UE can determine the setting of transmit diversity based on the number of repetitions and N_{allo_s}. In one example, in a slot, if the repetition number × N_{allo_s} is even, the UE can apply STBC as transmit diversity in the slot.

In a slot, if the repetition number × N_{allo_s} is odd, the UE performs the pairing from the first UL symbol in the slot (e.g., PUSCH/PUCCH symbol) to the tail (or from the last UL symbol (PUSCH/PUCCH symbol) to the head), and can control so that STBC is not applied to the remaining symbols.

In the case where N_{allo_s} is odd, the pairing can be performed between the in-slot repetition transmissions across repetition transmissions. Moreover, in this case, the repetition number is preferably even.

The UE starts the pairing from the head symbol in the odd-numbered slot repetition. The UE pairs the last symbol of the odd-numbered in-slot repetition and the head symbol of the even-numbered in-slot repetition across the repetition.

In other words, the UE pairs the last symbol of the even-numbered in-slot repetition with the symbol in the repetition. In addition, the UE also pairs the first symbol of the odd-numbered in-slot repetition with the symbol in the repetition.

Moreover, the "odd-numbered in-slot repetition" herein is not intended to limit an index of repetition (can be referred to as a repetition index) to odd, and indicates odd-numbered repetition regardless of whether the repetition is arranged consecutively (e.g., Fig. 4) or discontinuously (e.g., Fig. 5). The same applies to "even-numbered slot repetition".

In other words, in the former case, the UE can perform the pairing between adjacent repetitions. In addition, in the latter case, the UE can perform the pairing in the order of repetition transmission.

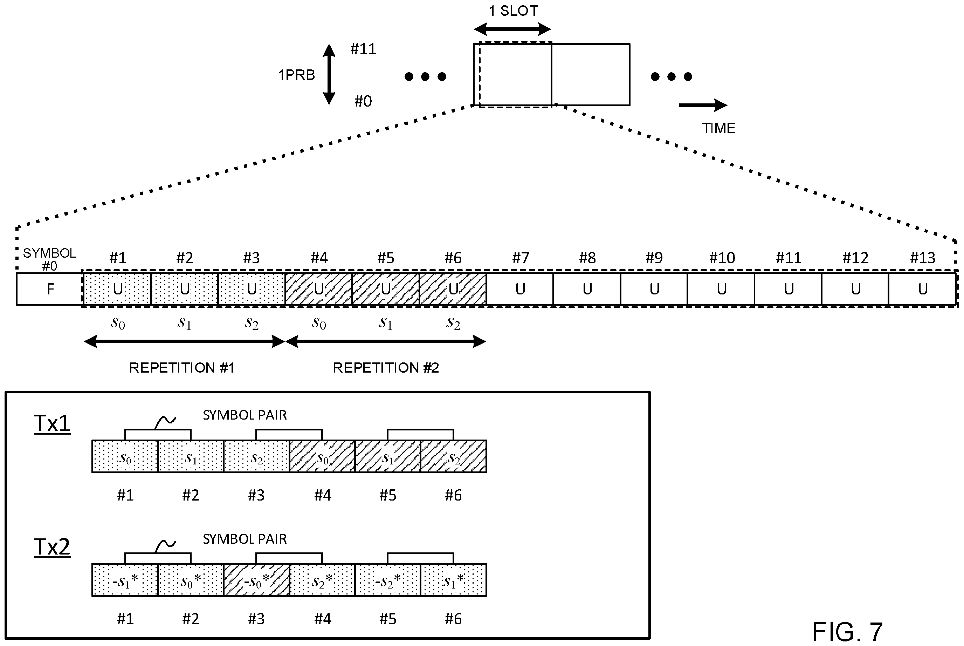

Fig. 7 is a diagram illustrating an example of pairing in one embodiment. This example is an example in which repetition #3 in Fig. 4 is not provided (in-slot repetition number = 2).

In the example of Fig. 7, the last UL symbol (symbol #3) of the odd-numbered in-slot repetition (repetition #1) is paired with the first UL symbol (symbol #4) of the even-numbered in-slot repetition (repetition #2). In this case, the UE transmits a signal (-s₀* in repetition #2) that should originally be transmitted to the following repetition at symbol #3 via Tx2, and transmits a signal (s₂* in repetition #1) that should originally be transmitted to the previous slot at symbol #4.

Moreover, the UE can normally perform the pairing between repetitions in the case where the in-slot repetition number is two or more. In other words, the UE can perform the pairing only on symbols between different repetitions in the in-slot repetition transmission. In one example, the UE can pair symbols at the same position in the odd-numbered in-slot repetition and the even-numbered in-slot repetition. In other words, the UE can assume that symbols in the repetition do not pair with each other.

Further, the UE may set the subcarrier spacing of a specific symbol in at least one of the repetitions to an even multiple (e.g., such as two, four, six, or eight times) of SCS of another symbol. The term "SCS of another symbol" herein can be read interchangeably as SCS of the original symbol, SCS that is set for the transmission signal (channel), default SCS, or the like.

In the specific symbol period, the UE is capable of mapping X symbols having a symbol length of 1/X with X times (where X = even) SCS, and pairs the X symbols two by two. The UE pairs the symbols in the repetition other than the specific symbol period with each other.

The specific symbol described above can be referred to as a symbol to which STBC is applied, a symbol to which the transmit diversity is applied, or the like. The symbol to which STBC is applied can be at least one symbol, and can be, for example, a symbol at the head of repetition, a symbol at the tail in a slot, or the like. In addition, the symbol to which STBC is applied can be both the head symbol and tail symbol, or can be all UL symbols or all symbols in repetition.

Information regarding the symbol to which STBC is applied (e.g., information used to specify symbol's identity in repetition) can be notified to the UE using higher layer signaling, physical layer signaling, or a combination thereof, or can be specified in advance by specifications.

Moreover, in the present disclosure, in the case where the SCS of a symbol is an even multiple, the UE can multiply the transmission bandwidth by an even number during the period of the symbol, or can reduce the number of resource blocks while keeping the transmission bandwidth as it is. In the latter case, the UE can adjust the modulation scheme, encoding rate, or the like so that the transmission signal having the same amount of information can be transmitted during the period of the symbol.

### <Others>

The UE can transmit, to the base station, UE capability information (UE capability) as to whether or not the in-slot repetition transmission can be performed. In addition, the UE can transmit, to the base station, UE capability information as to whether or not the transmit diversity can be applied at the same time as the in-slot repetition transmission.

The base station can transmit information used to specify a pairing method to be used by the UE based on the UE capability information reported from the UE, and can control the DL or UL scheduling, slot configuration, or the like of the UE.

In the embodiment described above, the description is given on the assumption that the symbol pair upon paring between repetitions by the UE is the symbols of the i^{th} and i+l^{th} repetitions, but is not limited to this combination. In one example, the pairing between repetitions can be performed between symbols in any repetition.

Further, the UE can apply STBC in each of the embodiments described above in one or more units of control. Examples of the unit of control include any one of a component carrier (CC), a CC group, a cell group, a PUCCH group, a MAC entity, a frequency range (FR), a band, a bandwidth part (BWP), or the like, or a combination thereof. The unit of control can be simply called a group.

The STBC of each embodiment described above can be available for PUCCH or PUSCH transmission of a particular UCI type. Moreover, the UCI type can mean any one of HARQ-ACK, SR (positive and negative SRs), CSI (may include such as CSI part 1 or CSI part 2), or a combination thereof.

The CSI can include at least one of channel quality indicator (CQI), precoding matrix indicator (PMI), a CSI-RS resource indicator (CRI), SS/PBCH block resource indicator (SSBRI or SS/PBCH block indicator), layer indicator (LI), rank indicator (RI), layer-1 reference signal received power (L1-RSRP), reference signal received quality in layer 1 (L1-RSRQ), signal to interference plus noise ratio in layer 1 (L1-SINR), signal to noise ratio in layer-1 (L1-SNR), or the like.

The CSI part 1 can include information having a relatively small number of bits (e.g., such as RI or wideband CQI). The CSI part 2 can include information having a relatively large number of bits (e.g., such as subband CQI or PMI) such as information determined based on the CSI part 1.

### (Radio Communication System)

A configuration of a radio communication system according to one embodiment of the present disclosure is hereinafter described. In this radio communication system, communication is performed using one or a combination of the radio communication methods according to the embodiments of the present disclosure.

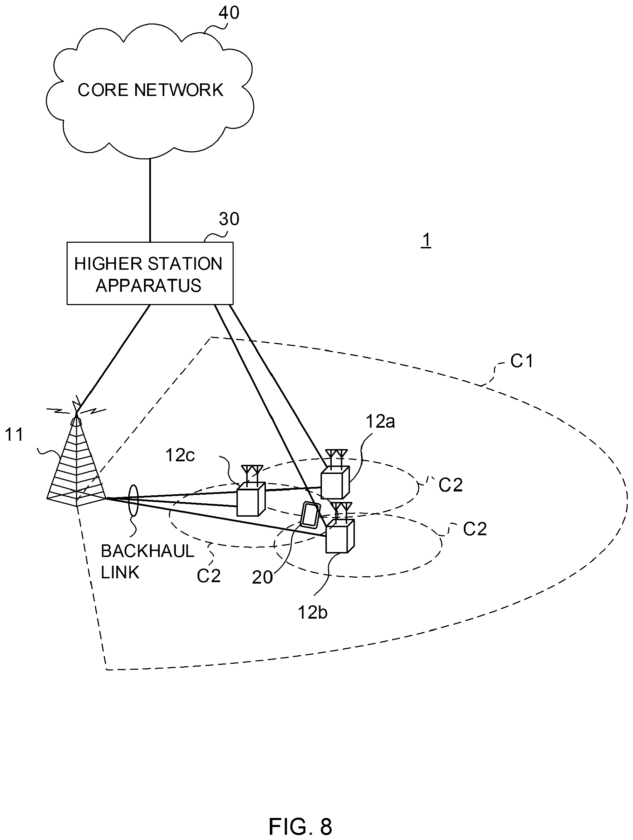

Fig. 8 is a diagram illustrating an example of a schematic configuration of a radio communication system according to an embodiment. At least one of carrier aggregation (CA) in which a plurality of fundamental frequency blocks (component carriers) in units of system bandwidth (for example, 20 MHz) are aggregated and dual connectivity (DC) may be applied to a radio communication system 1.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and the like, or may be seen as a system to implement these.

The radio communication system 1 includes a base station 11 that forms a macro cell C1 covering a relatively wide coverage, and base stations 12 (12a to 12c) that are arranged within the macro cell C1 and form small cells C2 that are narrower than the macro cell C1. Also, a user terminal 20 is placed in the macro cell C1 and in each small cell C2. The arrangement, number and the like of cells and user terminals 20 are not limited to the aspects illustrated in the drawings.

The user terminal 20 can connect with both the base station 11 and the base stations 12. It is assumed that the user terminal 20 uses the macro cell C1 and the small cells C2 at the same time using CA or DC. Furthermore, the user terminal 20 may apply CA or DC using a plurality of cells (CCs).

Between the user terminal 20 and the base station 11, communication can be carried out using a carrier of a relatively low frequency band (for example, 2 GHz) and a narrow bandwidth carrier (referred to as an "existing carrier", a "legacy carrier" and so on). Meanwhile, between the user terminal 20 and the base stations 12, a carrier of a relatively high frequency band (for example, 3.5 GHz, 5 GHz and so on) and a wide bandwidth may be used, or the same carrier as that used in the base station 11 may be used. Note that the structure of the frequency band for use in each base station is by no means limited to these.

Furthermore, in each cell, the user terminal 20 may perform communication using at least one of time division duplex (TDD) and frequency division duplex (FDD). Further, in each cell (carrier), a single numerology may be applied, or a plurality of different numerologies may be applied.

A numerology may be a communication parameter applied to at least one of transmission and reception of a certain signal or channel, and may indicate, for example, at least one of a subcarrier spacing, a bandwidth, a symbol length, a cyclic prefix length, a subframe length, a TTI length, the number of symbols per TTI, a radio frame configuration, specific filtering processing performed by a transceiver in the frequency domain, specific windowing processing performed by a transceiver in the time domain, etc.

For example, a physical channel that is different in at least one of the subcarrier spacing of OFDM symbols constituting it and the number of OFDM symbols may be said to have a different numerology.

Between the base station 11 and the base station 12 (or between two base stations 12) may be connected by wire (for example, an optical fiber, an X2 interface, and so on in compliance with the common public radio interface (CPRI)) or wirelessly.

The base station 11 and the base stations 12 are each connected with higher station apparatus 30, and are connected with a core network 40 via the higher station apparatus 30. Note that the higher station apparatus 30 may be, for example, an access gateway apparatus, a radio network controller (RNC), a mobility management entity (MME), and so on, but is by no means limited to these. Also, each base station 12 may be connected with the higher station apparatus 30 via the base station 11.

Note that the base station 11 is a base station having a relatively wide coverage, and may be referred to as a "macro base station", an "aggregate node", an "eNB (eNodeB)", a "transmission/reception point" and so on. Also, the base stations 12 are base stations having local coverages, and may be referred to as "small base stations", "micro base stations", "pico base stations", "Femto base stations", "HeNBs (Home eNodeBs)", "RRHs (Remote Radio Heads)", "transmission/reception points" and so on. Hereinafter, the base stations 11 and 12 will be collectively referred to as "base stations 10", unless these are distinguished from each other.

Each user terminal 20 are terminals to support various communication schemes such as LTE, LTE-A, NR, and the like, and may be either mobile communication terminals (mobile stations) or stationary communication terminals (fixed stations).

In the radio communication system 1, as a radio access scheme, orthogonal frequency division multiple access (OFDMA) is applied to a downlink, and at least one of single carrier-frequency division multiple access (SC-FDMA) and OFDMA is applied to an uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes can be used as well.

In the radio communication system 1, a physical downlink shared channel (PDSCH) shared by each user terminal 20, a physical broadcast channel (PBCH), a downlink control channel and the like are used as downlink channels. User data, higher layer control information, a system information block (SIB) and the like are transmitted on the PDSCH. Further, a master information block (MIB) is transmitted by the PBCH.

The downlink control channel includes a physical downlink control channel (PDCCH), an enhanced physical downlink control channel (EPDCCH), a physical control format indicator channel (PCFICH), a physical hybrid-ARQ indicator channel (PHICH) and the like. Downlink control information (DCI) and the like including scheduling information of at least one of the PDSCH and PUSCH are transmitted on the PDCCH.

Note that the DCI that schedules DL data reception may be called as DL assignment, and the DCI that schedules UL data transmission may be called as UL grant.

The number of OFDM symbols used in the PDCCH may be transmitted on the PCFICH. Delivery acknowledgement information of hybrid automatic repeat request (HARQ) to the PUSCH (for example, also called as retransmission control information, HARQ-ACK, ACK/NACK and the like) may be transmitted on the PHICH. The EPDCCH is frequency-division-multiplexed with the PDSCH (downlink shared data channel) and used to communicate DCI and so on, like the

### PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data, higher layer control information, and so on are transmitted by the PUSCH. Also, downlink radio quality information (channel quality indicator (CQI)), delivery acknowledgement information, scheduling request (SR), and so on are transmitted by the PUCCH. By means of PRACH, random access preambles for establishing connections with cells are transmitted.

In the radio communication systems 1, cell-specific reference signal (CRSs), channel state information reference signal (CSI-RSs), demodulation reference signal (DMRSs), positioning reference signal (PRSs) and so on are communicated as downlink reference signals. Also, in the radio communication system 1, a measurement reference signal (sounding reference signal (SRS)), a demodulation reference signal (DMRS), and so on are transmitted as uplink reference signals. Note that the DMRS may be referred to as a "user terminal-specific reference signal (UE-specific Reference Signal)". Also, the reference signals to be communicated are by no means limited to these.

### (Base Station)

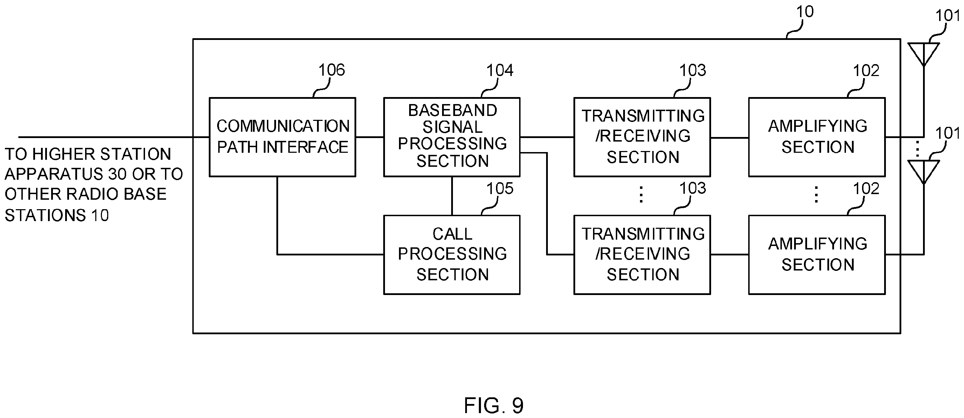

Fig. 9 is a diagram illustrating an example of an overall configuration of a base station according to an embodiment. A base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the base station 10 to the user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

The transmitting/receiving section 103 converts a baseband signal output from the baseband signal processing section 104 after being precoded in every antenna into a signal in a radio frequency band, and transmits the signal. The radio frequency signals having been subjected to frequency conversion in the transmitting/receiving sections 103 are amplified in the amplifying sections 102, and transmitted from the transmitting/receiving antennas 101. The transmitting/receiving section 103 can be constituted by a transmitter/receiver, a transmitting/receiving circuit or transmitting/receiving device that can be described based on general understanding of the technical field to which the present disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as configuring and releasing) of communication channels, manages the state of the base stations 10 and manages the radio resources, and the like.

The communication path interface 106 transmits and receives signals to and from the higher station apparatus 30 via a predetermined interface. Also, the communication path interface 106 may transmit and receive signals (backhaul signaling) with other base stations 10 via an inter-base station interface (which is, for example, optical fiber that is in compliance with the CPRI (Common Public Radio Interface), the X2 interface, and the like).

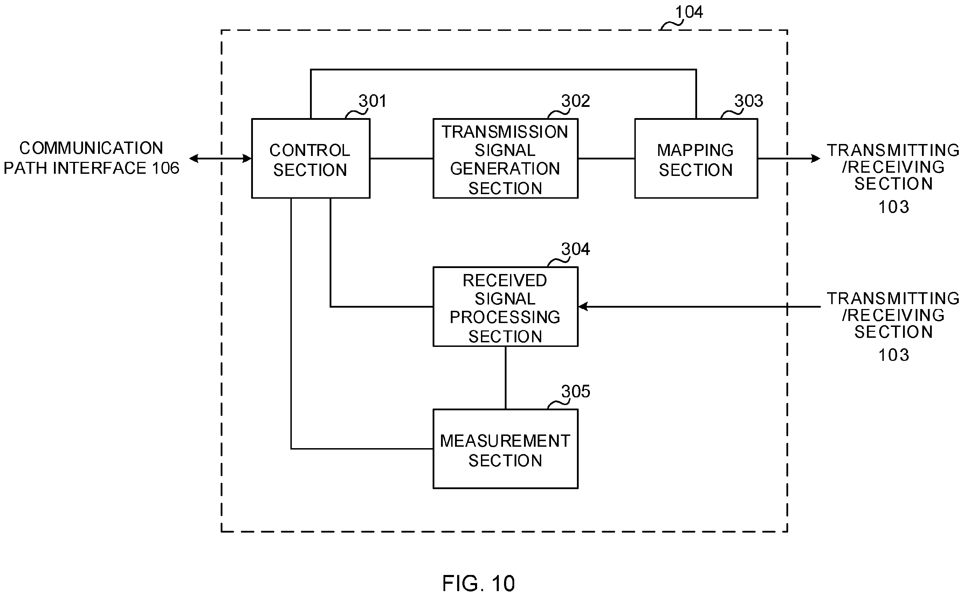

Fig. 10 is a diagram illustrating an example of a functional configuration of a base station according to an embodiment. Note that, although this example will primarily show functional blocks that pertain to characteristic parts of the present embodiment, it may be assumed that the base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the base station 10, and some or all of these configurations may not be included in the baseband signal processing section 104.

The control section (scheduler) 301 controls the whole of the base station 10. The control section 301 can be constituted by a controller, a control circuit, or control device that can be described based on general understanding of the technical field to which the present disclosure pertains.

For example, the control section 301 controls the generation of signals in the transmission signal generation section 302, the allocation of signals in the mapping section 303, and the like. Further, the control section 301 controls the signal receiving processing in the received signal processing section 304, the measurements of signals in the measurement section 305, and so on.

The control section 301 controls scheduling (e.g., resource allocation) of system information, a downlink data signal (e.g., a signal transmitted using the downlink shared channel), and a downlink control signal (e.g., a signal transmitted using the downlink control channel). The control section 301 controls the generation of downlink control signals, downlink data signals and so on, based on the results of deciding whether or not retransmission control is necessary for uplink data signals, and so on.

The control section 301 controls the scheduling of synchronization signals (for example, the PSS (Primary Synchronization Signal)/SSS (Secondary Synchronization Signal)), downlink reference signals (for example, the CRS, the CSI-RS, the DMRS, etc.), and the like.

The control section 301 controls scheduling of uplink data signal (e.g., a signal transmitted using an uplink shared channel), an uplink control signal (e.g., a signal transmitted using an uplink control channel), a random access preamble, an uplink reference signal, and the like.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit, or a signal generation device that can be described based on general understanding of the technical field to which the present disclosure pertains.

The transmission signal generation section 302 generates, for example, based on the instruction from the control section 301, at least one of the DL assignment that notifies the downlink data allocation information and the UL grant that notifies the uplink data allocation information. DL assignments and UL grants are both DCI, and follow the DCI format. Also, the downlink data signals are subjected to the coding process, the modulation process and so on, by using coding rates and modulation schemes that are determined based on, for example, channel state information (CSI) reported from each user terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit, or a mapping device that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, and so on). The received signal processing section 304 can be constituted by a signal processor, a signal processing circuit, or a signal processing device that can be described based on general understanding of the technical field to which the present disclosure pertains.

The received signal processing section 304 outputs, to the control section 301, information decoded by the receiving processing. For example, when a PUCCH to contain an HARQ-ACK is received, the received signal processing section 304 outputs this HARQ-ACK to the control section 301. In addition, the received signal processing section 304 outputs at least one of the received signal and the signal after the receiving process to the measurement section 305.

The measurement section 305 conducts measurements with respect to the received signals. The measurement section 305 can be constituted by a measurer, a measurement circuit, or a measurement device that can be described based on general understanding of the technical field to which the present disclosure pertains.

For example, the measurement section 305 may perform RRM (Radio Resource Management) measurements, CSI (Channel State Information) measurements and so on, based on the received signals. The measurement section 305 may measure the received power (for example, reference signal received power (RSRP)), the received quality (for example, reference signal received quality (RSRQ), signal to interference plus noise ratio (SINR), signal to noise ratio (SNR)), the signal strength (for example, received signal strength indicator (RSSI)), the transmission path information (for example, CSI), and so on. The measurement results may be output to the control section 301.

Moreover, the transmitting/receiving section 103 can transmit, to the user terminal 20, setting information used to apply transmit diversity (e.g., STBC) to the uplink symbol, setting information for multi-slot transmission, or the like.

The transmitting/receiving section 103 can transmit information regarding the number of symbols instructed to perform UL transmission in a slot (e.g., N_{allo_s}) and information regarding the number of UL symbols in the slot (e.g., N_{UL_s}) .

The control section 301 can perform control for determining whether or not to perform repetition transmission in a slot (in-slot repetition transmission) based on N_{allo_s} and N_{UL_s}.

### (User Terminal)

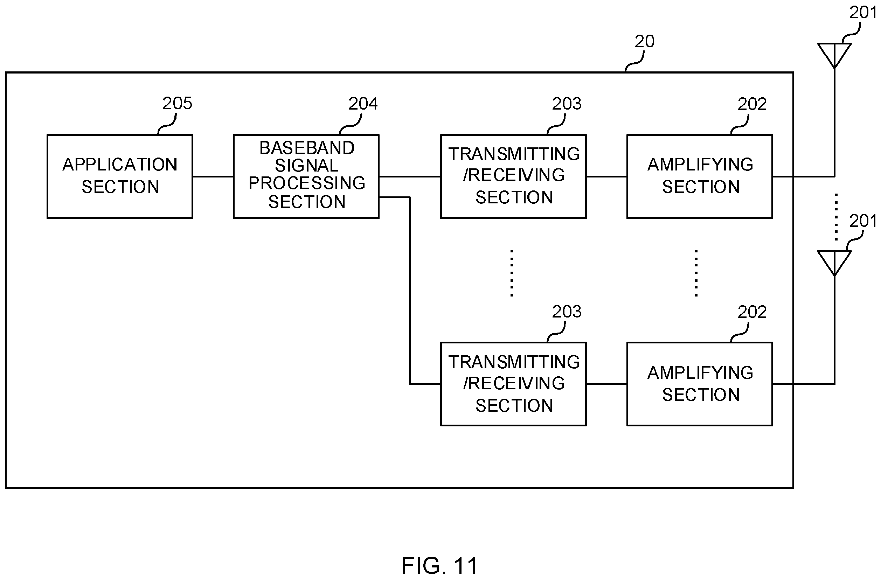

Fig. 11 is a diagram illustrating an exemplary overall structure of a user terminal according to an embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. The transmitting/receiving sections 203 can be constituted by a transmitter/receiver, a transmitting/receiving circuit or transmitting/receiving device that can be described based on general understanding of the technical field to which the present disclosure pertains. Note that a transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

Baseband signals that are output from the baseband signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

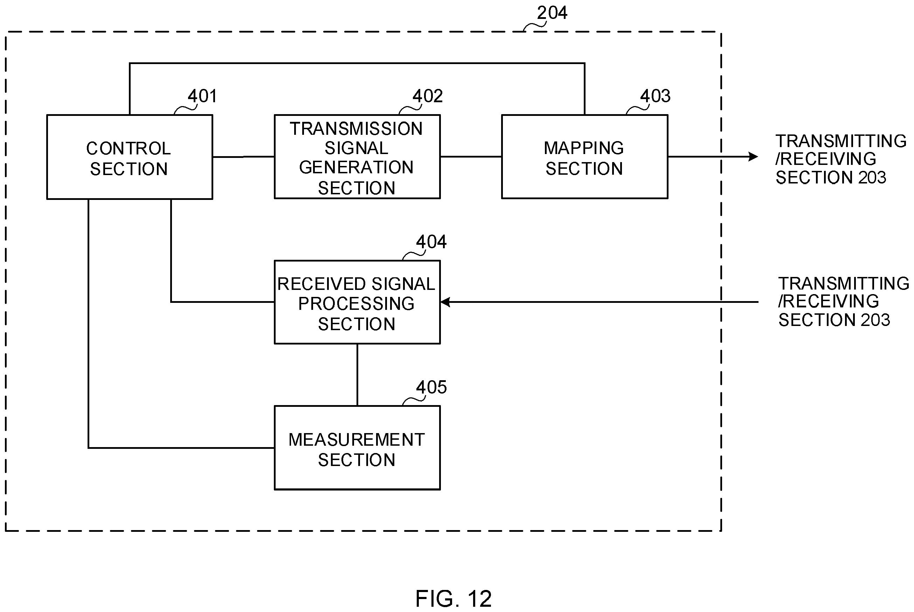

Fig. 12 is a diagram illustrating an exemplary functional structure of a user terminal according to an embodiment. Note that, although this example will primarily show functional blocks that pertain to characteristic parts of the present embodiment, it may be assumed that the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations may be included in the user terminal 20, and some or all of the configurations need not be included in the baseband signal processing section 204.

The control section 401 controls the whole of the user terminal 20. The control section 401 can be constituted by a controller, a control circuit, or control device that can be described based on general understanding of the technical field to which the present disclosure pertains.

The control section 401, for example, controls the generation of signals in the transmission signal generation section 402, the allocation of signals in the mapping section 403, and so on. Further, the control section 401 controls the signal receiving processing in the received signal processing section 404, the measurements of signals in the measurement section 405, and so on.

The control section 401 acquires, from the received signal processing section 404, the downlink control signal, the downlink data signal, and the like transmitted from the base station 10. The control section 401 controls the generation of the uplink control signal, the uplink data signal, or the like based on the downlink control signal or the like as a result of determining whether or not retransmission control for the downlink data signal is necessary.

When the control section 401 acquires various types of information notified from the base station 10 from the received signal processing section 404, the control section 401 may update the parameters used for control based on the information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit, or a signal generation device that can be described based on general understanding of the technical field to which the present disclosure pertains.

For example, the transmission signal generation section 402 generates uplink control signals such as delivery acknowledgement information, channel state information (CSI) and so on, based on commands from the control section 401. Also, the transmission signal generation section 402 generates uplink data signals based on instructions from the control section 401. For example, when a UL grant is included in a downlink control signal that is reported from the base station 10, the control section 401 instructs the transmission signal generation section 402 to generate an uplink data signal.

The mapping section 403 maps the uplink signals generated in the transmission signal generation section 402 to radio resources based on commands from the control section 401, and output the result to the transmitting/receiving section 203. The mapping section 403 can be constituted by a mapper, a mapping circuit, or a mapping device that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals, and so on) that are transmitted from the base station 10. The received signal processing section 404 can be constituted by a signal processor, a signal processing circuit, or a signal processing device that can be described based on general understanding of the technical field to which the present disclosure pertains. Also, the received signal processing section 404 can constitute the receiving section according to the present disclosure.

The received signal processing section 404 outputs the decoded information that is acquired through the receiving processing to the control section 401. The received signal processing section 404 outputs, for example, broadcast information, system information, RRC signaling, DCI and so on, to the control section 401. In addition, the received signal processing section 404 outputs at least one of the received signal and the signal after the receiving process to the measurement section 405.

The measurement section 405 conducts measurements with respect to the received signals. The measurement section 405 can be constituted by a measurer, a measurement circuit, or a measurement device that can be described based on general understanding of the technical field to which the present disclosure pertains.

For example, the measurement section 405 may perform RRM measurements, CSI measurements and so on based on the received signals. The measurement section 405 may measure the received power (for example, RSRP), the received quality (for example, RSRQ, SINR, SNR), the signal strength (for example, RSSI), transmission path information (for example, CSI), and so on. The measurement results may be output to the control section 401.

Moreover, the transmitting/receiving section 203 can receive setting information used to apply the transmit diversity (e.g., STBC) to the uplink symbol. In the case where multi-slot transmission is set, the transmitting/receiving section 203 can perform UL transmission (PUSCH or PUCCH) over a plurality of slots.

The transmitting/receiving section 203 can receive information regarding the number of symbols instructed to perform UL transmission in a slot (e.g., N_{allo_s}) and information regarding the number of UL symbols in the slot (e.g., N_{UL_s}).

The control section 401 can determine whether or not to perform repetition transmission in a slot (in-slot repetition transmission) based on N_{allo_s} and N_{UL_s}.

The control section 401 can determine to perform repetition transmission in the slot in the case where the value obtained by dividing N_{UL_s} by N_{allo_s} is two or more.

The control section 401 can control so that each repetition of the in-slot repetition transmission starts from the set start position candidate.

The control section 401 can determine whether or not to apply the transmit diversity (e.g., STBC) in the slot based on the number of repetitions and N_{allo_s}.

### (Hardware Configuration)

Note that the block diagrams that have been used to describe the above embodiments illustrate blocks in functional units. These functional blocks (configuration units) may be implemented in arbitrary combinations of at least one of hardware or software. Also, the method for implementing each functional block is not particularly limited. That is, each functional block may be achieved by a single device physically or logically aggregated, or may be achieved by directly or indirectly connecting two or more physically or logically separate devices (using wires, radio, or the like, for example) and using these plural devices. The functional block may be achieved by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and so on. For example, a functional block (configuration unit) that causes transmission to function may be called as a transmitting section, a transmitter and the like. In any case, as described above, the implementation method is not particularly limited.

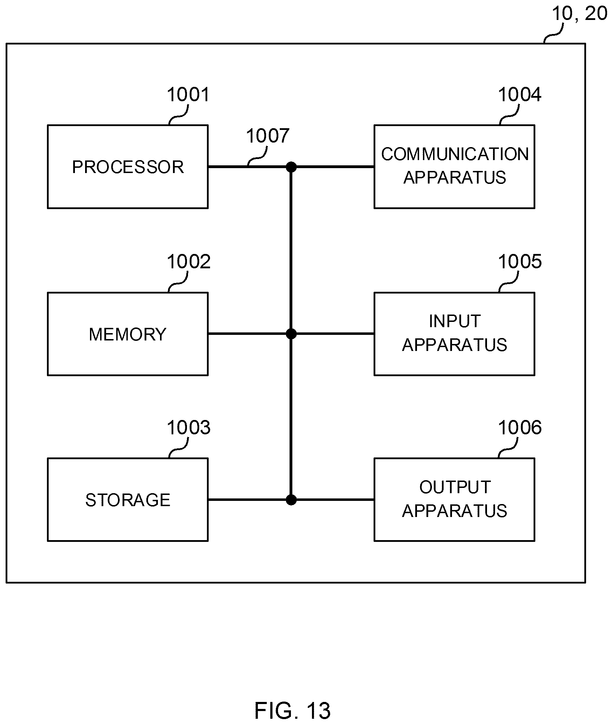

For example, the base station, the user terminal, and so on according to one embodiment of the present disclosure may function as a computer that executes the processing of the radio communication method of the present disclosure. Fig. 13 is a diagram illustrating an exemplary hardware structure of a base station and a user terminal according to an embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be replaced by "circuit," "device," "unit" and so on. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. Furthermore, processes may be implemented with one processor, or processes may be implemented in parallel, in sequence, or in different manners, on two or more processors. Note that the processor 1001 may be implemented with one or more chips.

Each function of the base station 10 and the user terminal 20 is implemented by, for example, reading predetermined software (program) into hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, by running an operating system. The processor 1001 may be configured with a central processing unit (CPU), which includes interfaces with peripheral equipment, a control device, a computing apparatus, a register, and so on. For example, the above-described baseband signal processing section 104 (204), call processing section 105 and so on may be implemented by the processor 1001.

Furthermore, the processor 1001 reads programs (program codes), software modules, data, and so on from at least one of the storage 1003 or the communication apparatus 1004 into the memory 1002, and executes various processing according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register", a "cache", a "main memory (primary storage apparatus)" and so on. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for performing inter-computer communication via at least one of a wired network or a wireless network, and for example, is referred to as "network device", "network controller", "network card", "communication module", and the like. The communication apparatus 1004 may be configured to include a high frequency switch, a duplexer, a filter, a frequency synthesizer and so on in order to implement, for example, at least one of frequency division duplex (FDD) or time division duplex (TDD). For example, the above-described transmitting/receiving antennas 101 (201), amplifying sections 102 (202), transmitting/receiving sections 103 (203), communication path interface 106, and so on may be implemented by the communication apparatus 1004. The transmitting/receiving section 103 may be implemented by physically or logically separating a transmitting section 103a and a receiving section 103b.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the base station 10 and the user terminal 20 may be configured to include hardware such as a microprocessor, a digital signal processor (DSP), an application-specific integrated circuit (ASIC), a programmable logic device (PLD), a field programmable gate array (FPGA), and so on, and part or all of the functional blocks may be implemented by the hardware. For example, the processor 1001 may be implemented with at least one of these pieces of hardware.

### (Variations)

Note that the terminology used in the present disclosure and the terminology that is needed to understand the present disclosure may be replaced with other terms that convey the same or similar meanings. For example, at least one of "channels" or "symbols" may be replaced with "signals" (or "signaling"). Also, "signals" may be replaced with "messages". A reference signal can be abbreviated as an "RS", and may be referred to as a "pilot", a "pilot signal" and so on, depending on which standard applies. Furthermore, a "component carrier (CC)" may be referred to as a "cell," a "frequency carrier," a "carrier frequency" and so on.

A radio frame may be formed with one or more durations (frames) in the time domain. Each of one or more periods (frames) constituting a radio frame may be referred to as a "subframe". Furthermore, a subframe may be formed with one or multiple slots in the time domain. A subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain, and so on.

A slot may be formed with one or more symbols in the time domain (Orthogonal Frequency Division Multiplexing (OFDM) symbols, Single Carrier Frequency Division Multiple Access (SC-FDMA) symbols, or the like). Also, a slot may be a time unit based on numerology.

A slot may include a plurality of minislots. Each minislot may be formed with one or more symbols in the time domain. Also, a minislot may be referred to as a "subslot". Each minislot may be formed with fewer symbols than a slot. A PDSCH (or PUSCH) transmitted in a time unit larger than a minislot may be referred to as PDSCH (PUSCH) mapping type A. A PDSCH (or PUSCH) transmitted using a minislot may be referred to as "PDSCH (PUSCH) mapping type B".

A radio frame, a subframe, a slot, a minislot and a symbol all represent the time unit in signal communication. A radio frame, a subframe, a slot, a minislot, and a symbol may be each called by other applicable names. Note that time units such as a frame, a subframe, a slot, a minislot, and a symbol in the present disclosure may be replaced with each other.

For example, one subframe may be referred to as a "transmission time interval (TTI)," or a plurality of consecutive subframes may be referred to as a "TTI," or one slot or mini-slot may be referred to as a "TTI." That is, at least one of a subframe or a TTI may be a subframe (1 ms) in existing LTE, may be a shorter period than 1 ms (for example, one to thirteen symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that when TTI is given, a time interval (for example, the number of symbols) in which the transport blocks, the code blocks, the codewords, and the like are actually mapped may be shorter than TTI.

Note that, when one slot or one minislot is referred to as a "TTI," one or more TTIs (that is, one or more slots or one or more minislots) may be the minimum time unit of scheduling. Also, the number of slots (the number of minislots) to constitute this minimum time unit of scheduling may be controlled.

TTI having a time length of 1 ms may be called usual TTI (TTI in LTE Rel. 8-12), normal TTI, long TTI, a usual subframe, a normal subframe, a long subframe, a slot, or the like. A TTI that is shorter than the usual TTI may be referred to as "shortened TTI", "short TTI", "partial TTI" (or "fractional TTI"), "shortened subframe", "short subframe", "minislot", "sub-slot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one minislot, one subframe or one TTI in length. One TTI, one subframe, and the like each may be formed with one or more resource blocks.

Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, one RE may be a radio resource field of one subcarrier and one symbol.

The bandwidth part (BWP) (which may be called partial bandwidth and the like) may represent a subset of consecutive common RB (common resource blocks) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a predetermined signal/channel outside the active BWP. Note that "cell", "carrier", and the like in the present disclosure may be replaced with "BWP".

Note that the structures of radio frames, subframes, slots, minislots, symbols and so on described above are merely examples. For example, configurations pertaining to the number of subframes included in a radio frame, the number of slots included in a subframe or radio frame, the number of mini-slots included in a slot, the number of symbols and RBs included in a slot or a mini-slot, the number of subcarriers included in an RB, the number of symbols in a TTI, the symbol length, the length of cyclic prefixes (CPs) and so on can be variously changed.

Furthermore, the information and parameters described in the present disclosure may be represented in absolute values, represented in relative values with respect to given values, or represented using other corresponding information. For example, a radio resource may be specified by a predetermined index.

The names used for parameters and so on in the present disclosure are in no respect limiting. In addition, an equation and so on using these parameters may differ from those explicitly disclosed in the present disclosure. Since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals, and the like described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals, and the like can be output at least either from higher layers to lower layers, or from lower layers to higher layers. Information, signals and so on may be input and output via a plurality of network nodes.

The information, signals and so on that are input and/or output may be stored in a specific location (for example, in a memory), or may be managed in a control table. The information, signals and so on to be input and/or output can be overwritten, updated or appended. The information, signals and so on that are output may be deleted. The information, signals and so on that are input may be transmitted to other pieces of apparatus.

The reporting of information is by no means limited to the aspects/embodiments described in the present disclosure, and may be performed using other methods. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages", and can be, for example, an RRC connection setup (RRCConnectionSetup) message, RRC connection reconfiguration (RRCConnectionReconfiguration) message, and so on. Also, MAC signaling may be reported using, for example, MAC control elements (MAC CEs (Control Elements)) .

Also, reporting of predetermined information (for example, reporting of information to the effect that "X holds") does not necessarily have to be sent explicitly, and can be sent implicitly (for example, by not reporting this piece of information, or by reporting another piece of information, and so on).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server, or other remote sources by using at least one of wired technologies (coaxial cables, optical fiber cables, twisted-pair cables, digital subscriber lines (DSLs), and the like) or wireless technologies (infrared radiation, microwaves, and the like), at least one of these wired technologies or wireless technologies are also included in the definition of communication media.

The terms "system" and "network" used in the present disclosure may be used interchangeably.

In the present disclosure, the terms such as "precoding", "precoder", "weight (precoding weight)", "quasi-co-location (QCL)", "transmission configuration indication state (TCI state))", "spatial relation", "spatial domain filter", "transmission power", "phase rotation", "antenna port", "antenna port group", "layer", " "number of layers", "rank", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be called a term such as a macro cell, a small cell, a femto cell, a pico cell, and the like.

A base station can accommodate one or more (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to all or part of the coverage area of at least one of a base station or a base station subsystem that provides communication services within this coverage.

In the present disclosure, the terms "mobile station (MS)", "user terminal", "user equipment (UE)", "terminal", and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station or a mobile station may be referred to as transmitting apparatus, receiving apparatus, communication apparatus, and so on. Note that at least one of the base station or the mobile station may be a device mounted on a mobile unit, a mobile unit itself, or the like. The moving body may be a transportation (for example, a car, an airplane and so on), an unmanned moving body (for example, a drone, an autonomous car, and so on), or a (manned or unmanned) robot. Note that at least one of the base station or the mobile station also includes a device that does not necessarily move during a communication operation. For example, at least one of the base station or the mobile station may be an IoT (Internet of Things) device such as a sensor.

Furthermore, the base stations in the present disclosure may be replaced with the user terminal. For example, each aspect/embodiment of the present disclosure may be applied to a structure in which communication between the base station and the user terminal is replaced with communication among a plurality of user terminals (which may be referred to as, for example, D2D (Device-to-Device), V2X (Vehicle-to-Everything) and so on). In this case, the user terminal 20 may be configured to have the functions of the base station 10 described above. In addition, the wording such as "up" and "down" may be replaced with the wording corresponding to the terminal-to-terminal communication (for example, "side"). For example, an uplink channel and a downlink channel may be replaced with a side channel.

Likewise, the user terminal in the present disclosure may be replaced with a base station. In this case, the base station 10 may be configured to have the functions of the user terminal 20 described above.

Certain actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, regarding the methods described in the present disclosure, elements of various steps are presented using an illustrative order, and are not limited to the presented particular order.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New Radio Access Technology (New-RAT), New Radio (NR), New radio access (NX), Future generation radio access (FX), Global System for Mobile communications (GSM; registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and/or next generation systems or the like that are enhanced based on these. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on."

Reference to elements with designations such as "first", "second", and so on as used in the present disclosure does not generally limit the number/quantity or order of these elements. These designations may be used in the present disclosure only for convenience, as a method for distinguishing between two or more elements. In this way, reference to the first and second elements does not imply that only two elements may be employed, or that the first element must precede the second element in some way.

The terms "judging (determining)" as used in the present disclosure may encompass a wide variety of actions. For example, "judging (determining)" may be interpreted to mean making judgements and determinations related to judging, calculating, computing, processing, deriving, investigating, looking up, search, inquiry (for example, looking up in a table, database, or another data structure), ascertaining, and so on.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" may be interpreted to mean making judgements and determinations related to resolving, selecting, choosing, establishing, comparing and so on. In other words, to "judge" and "determine" may be interpreted to mean making judgements and determinations related to some action.

In addition, to "judge (determine)" may be replaced with "assuming", "expecting", "considering", and so on.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the term may mean that "A and B are respectively different from C". The terms such as "leave" "coupled" and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be implemented with corrections and modifications, without departing from the spirit and scope of the invention defined by the recitations of claims. Consequently, the description of the present disclosure is provided for the purpose of exemplification and explanation, and has no limitative meaning to the invention according to the present disclosure.

## Claims

1. A user terminal comprising:
a receiving section configured to receive information regarding a number of symbols instructed to perform UL transmission in a slot and information regarding a number of UL symbols in the slot; and
a control section configured to determine whether or not to perform repetition transmission in the slot based on the number of symbols instructed to perform the UL transmission and the number of UL symbols.

2. The user terminal according to claim 1, wherein the control section determines, in a case where a value obtained by dividing the number of UL symbols by the number of symbols instructed to perform the UL transmission is two or more, to perform the repetition transmission in the slot.

3. The user terminal according to claim 1 or 2, wherein the control section controls so that each repetition of repetition transmission in the slot starts from a set start position candidate.

4. The user terminal according to any one of claims 1 to 3, wherein the control section determines whether or not to apply transmit diversity in the slot based on the number of repetitions and the number of symbols instructed to perform the UL transmission.

5. A radio communication method of a user terminal, comprising:
receiving information regarding a number of symbols instructed to perform UL transmission in a slot and information regarding a number of UL symbols in the slot; and
determining whether or not to perform repetition transmission in the slot based on the number of symbols instructed to perform the UL transmission and the number of UL symbols.
